# EUROPEAN PATENT SPECIFICATION

(11) **EP 1 713 692 B1**
(45) Date of publication and mention of the grant of the patent: **11.04.2012**
(21) Application number: 05702384.8
(22) Date of filing: 01.02.2005
(51) Int. Cl.: B65B 3/36, B67C 3/20, B67C 3/28

(54) **FILLING MACHINE WITH TIME-CONTROLLED DOSING VALVES**
FÜLLMASCHINE MIT ZEITGESTEUERTEN DOSIERVENTILEN
MACHINE DE REMPLISSAGE A SOUPAPES DE DOSAGE A COMMANDE DE REGLAGE DE LA DUREE

(30) Priority: 10.02.2004 IT BO20040059
(43) Date of publication of application: 25.10.2006
(73) Proprietor: SACMI FILLING S.p.A., 43100 Parma (IT)
(72) Inventor: STOCCHI, Gabriele, I-43100 Parma (IT)
(74) Representative: Beszédes, Stephan G.
(86) International application number: PCT/IB2005/000234
(87) International publication number: WO 2005/080202

(56) References cited:
- EP-A- 1 447 329
- DE-A1- 10 149 473
- GB-A- 2 288 168
- US-A- 4 202 387
- US-A- 5 273 082

## Description

The present invention relates to a filling machine having time-controlled dosing valves and at least one master valve provided with an electronic flow meter that is connected to a computer unit which is adapted to control a timing for operations of dosed filling of at least one master bottle by presetting a time necessary to dose an actual amount of liquid which is to be delivered to each valve from a pressurized tank, the tank being adapted to hold a pressure inside which is higher than an outside atmospheric pressure, and to be introduced in bottles to be filled in continuous transit.

Such a filling machine is disclosed in the document US 5,273,082 A1, which corresponds to the preamble of claim 1.

### Field of the art

The present invention concerns the technology of filling machines equipped with time-controlled dosing valves.

### State of the art

The use of time-controlled valves to set the amount of liquid to be introduced in each bottle is known. The time necessary for each bottle dosed filling is empirically set during the initial set-up operations of the bottling plant functioning regime. The initial settings are kept unaffected provided that the operating conditions of the dosed liquid flowing are repeated. Such operating conditions are affected by several thermoflowdynamic factors. It is known that a valve flowrate, given the opening time, depends on the downflow speed. Also, the downflow speed values are affected by the circuit flow resistance. The values of flow resistance are affected by several factors such as viscosity, density, temperature, the centrifugal force of the rotary fillers, the geometry of the conduits, the level of the liquid and the pressure inside the feeding tank. The target is to keep constant the initial settings despite the variation of the parameters affecting the repeatability of flow conditions. The solution proposed by the present invention solves all the above mentioned problems and neutralizes the variation of the thermoflowdynamic parameters on the initial settings of the filling plant.

The document US 4,202,387 discloses a fluid dispensing control system. In this fluid dispensing control system, the size of a container to be filled is established by a set of photosensors mounted on the dispenser housing. Discrimination circuitry distinguishes between ambient light level and light reflected from the container that is placed under the spout. Delay and lock-out circuitry is provided to ensure that an erroneous size-indicating signal is not generated as the container is moved into position, and to ensure that the size-indicating signal does not change once pouring has begun. Timer circuitry controls the pouring duration and ensures complete, uniform filling of each size container. Counter and display circuitry tallies the number of containers, of each size that have been filled, and indicates the total volume of fluid that has been dispensed.

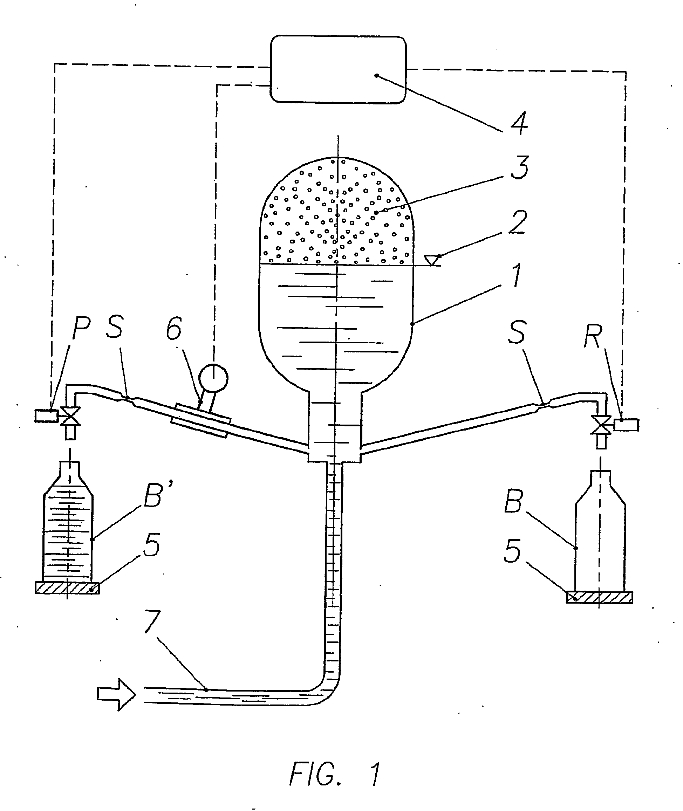

The invention is now disclosed in details with reference to the figure 1 of the schematic drawing attached to be considered as an unrestricted example. In said figure 1 each single detail is marked as follows:
1 the tank that contains the liquid to be delivered.
2 the level of the liquid.
3 the presence of a liquid under pressure inside tank 1.
4 a computer unit that controls the process of dosed filling.
5 a structure supporting the bottles.
6 an electronic flowmeter.
7 the liquid feeding conduit.

B a bottle to be filled.
B' a master bottle filled during the initial setting of the plant.
P a master valve.
R a series of dosing valves set and controlled electronically.
S a throttling diaphragm set upstream each filling valve.

The evidence of figure 1, which presents schematically one of the possible forms of its practical realizations, highlights the manufacturing simplicity of the present invention. The invention can be realised in different forms and the structural dimensioning and proportioning of the several components of the bottling plant can be different The bottling plant will be realized in accordance with the different technological choices complying with the specific needs of the market of the distribution of clear liquid filled without contact with the transiting bottle. The pressure inside the tank always needs to be higher than the outside atmospheric pressure.

An extended series of experimental control activities have allowed determining that the optimal value of the pressure inside the tank is three times higher than the outside pressure.

Upon disclosure of the innovative characteristics of the invention, any average technician knowing this field of technology, will be able to realize, without inventive effort, filling machines equipped with time-controlled dosing valves set in accordance with a master valve, provided with electronic flowmeter connected to a computer unit that controls the timing of the dosed filling operations to preset the time necessary to dose the actual amount of liquid delivered from a pressurized tank to each valve and then introduced without contact in all the bottles in transit. The inventive core of the present invention is the application upstream each valve of a throttling diaphragm set with very high flow resistances that neutralize the relative variations of all the other parameters that might affect the repeatability of the operating conditions of the flow of dosed liquid. Therefore, all filling machines, with pressurised feeding tank, equipped with at least a master valve provided with a flowmeter connected to a computer unit that controls the operations of dosed filling of a plurality of valves upstream of which diaphragms for the set throttling are positioned, with the functional characteristics as basically described, illustrated and hereinafter claimed, will be considered as being part of the protection sphere of the present invention.

## Claims

1. A filling machine for liquids comprising a pressurized tank containing a liquid, which is adapted to hold a pressure inside which is higher than an outside atmospheric pressure, and said filling machine further comprising time-controlled dosing valves (R), a computer unit (4) which is adapted to control a timing for operations of dosed filling of at least one master bottle (B') by presetting a time necessary to dose an actual amount of liquid which is to be delivered to each dosing valve (R, P) from said pressurized tank and to be introduced in bottles (B) to be filled in continuous transit, and at least one master valve (P) provided with an electronic flow meter (6) that is connected to said computer unit **characterized by** throttling diaphragms (S), each of which is associated to one of the dosing valves (R, P) and arranged upstream relative to the respective associated dosing valve (R, P), each throttling diaphragm (S) having a flow resistance such high that relative variations of parameters, such as viscosity, density, or temperature, that affect a repeatability of operating conditions of the dosed liquid flow, are neutralized.

## Patentansprüche

1. Abfüllmaschine für Flüssigkeiten, umfassend einen Druckbehälter, der eine Flüssigkeit enthält und eingerichtet ist, um im Inneren einen Druck zu halten, der höher ist als ein äußerer Umgebungsdruck, und wobei die Abfüllmaschine ferner zeitgesteuerte Dosierventile (R), eine Computereinheit (4), die eingerichtet ist, um eine Zeitgabe für Arbeitsschritte zum dosierten Befüllen zumindest einer Hauptflasche (B') zu steuern, indem eine Zeit voreingestellt wird, die erforderlich ist, um eine tatsächliche Menge von Flüssigkeit zu dosieren, welche von dem Druckbehälter an jedes Dosierventil (R, P) geliefert werden soll und in Flaschen (B) eingeleitet werden soll, die in einem kontinuierlichen Durchgang befüllt werden sollen, und zumindest ein Hauptventil (P) umfasst, das mit einem elektronischen Durchflussmesser (6) versehen ist, welcher mit der Computereinheit verbunden ist, **gekennzeichnet durch** Drosselmembranen (S), von denen jede einem der Dosierventile (R, P) zugeordnet ist und oberstromig in Bezug auf das jeweilige zugeordnete Dosierventil (R, P) angeordnet ist, wobei jede Drosselmembran (S) einen Strömungswiderstand aufweist, der so hoch ist, dass relative Schwankungen von Parametern wie z. B. der Viskosität, der Dichte oder der Temperatur, welche die Wiederholbarkeit der Betriebsbedingungen der dosierten Flüssigkeitsströmung beeinflussen, kompensiert werden.

## Revendications

1. Remplisseuse de liquides comprenant un réservoir pressurisé contenant un liquide et adapté à contenir une pression intérieure supérieure à la pression atmosphérique extérieure, et ladite remplisseuse comprenant en outre des vannes de dosage (R) programmées dans le temps, une unité d'ordinateur (4) adaptée pour le contrôle d'une programmation des opérations de remplissage par dosage d'au moins une bouteille maître (B') en préréglant une durée nécessaire pour le dosage d'une quantité réelle de liquide à fournir à chaque vanne de dosage (R, P) depuis ledit réservoir pressurisé et à introduire dans des bouteilles (B) à remplir en transit continu, et au moins une vanne maître (P) équipée d'un débitmètre électronique (6) relié à ladite unité d'ordinateur, **caractérisée par** des membranes d'étranglement (S), dont chacune est associée à l'une des vannes de dosage (R, P) et disposée en amont par rapport à la vanne de dosage (R, P) associée respective, chaque membrane d'étranglement (S) ayant une résistance à l'écoulement si élevée que les variations relatives des paramètres comme la viscosité, la densité ou la température, qui affectent une répétabilité des conditions d'exploitation de l'écoulement de liquide dosé sont neutralisées.
